# EUROPEAN PATENT SPECIFICATION

(11) **EP 0 425 243 B1**
(45) Date of publication and mention of the grant of the patent: **05.03.1997**
(21) Application number: 90311608.5
(22) Date of filing: 23.10.1990
(51) Int. Cl.: H04N 5/232, H04N 5/238

(54) **Lens control apparatus**
Gerät zum Kontrollieren von Objektiven
Appareil pour contrôler objectif

(30) Priority: 24.10.1989 JP 276536/89; 30.10.1989 JP 282605/89
(43) Date of publication of application: 02.05.1991
(73) Proprietor: SONY CORPORATION, Tokyo 141 (JP)
(72) Inventor: Iwamoto, Koji, c/o Patents Division, Shinagawa-ku, Tokyo 141 (JP)
(74) Representative: Cotter, Ivan John

(56) References cited:
- EP-A- 0 334 470
- EP-A- 0 382 222
- US-A- 4 296 446
- PATENT ABSTRACTS OF JAPAN vol. 10, no. 279 (E-439)(2335) 20 September 1986 & JP-A-61 100 079

## Description

This invention relates to lens control apparatus for video cameras.

Video cameras are known with motor-driven lenses which effect automatic focus control, as well as operator-initiated zoom lens control. To provide greater flexibility and permit the use thereof under diverse conditions, some such video cameras have interchangeable lenses. Consequently, different lenses having different focal lengths and different ranges of aperture openings (fstops) may be used with a given video camera. Depending upon the distance of the imaged object from the camera and the lighting conditions thereof, the user is provided with a wide selection of lenses for use.

Zoom lenses having selectively variable focal lengths also are available for use with video cameras to permit artistic effects by zooming in or out, and also to permit the use of one lens to image an object whose distance from the camera may change.

Video cameras that are designed for fixed lenses as well as those that are designed for interchangeable lenses generally control the focusing and/or zooming effect by means of one or more drive motors. To facilitate the use of several different interchangeable lenses, it has been proposed to incorporate the lens drive motor and the lens elements in a common housing which, together with control circuitry, is referred to generally as a lens device. One example of a lens device having both a focusing motor and a zoom motor is described in Japanese published patent application JP-A-63 042 274. The video camera with which this lens device is used includes circuitry to produce a focus control signal and a zoom control signal which are coupled to the focus and zoom motors in the lens device by an electrical connection which is formed when the lens device is mounted on the camera. The focus motor thus adjusts the focus condition of the lens device and the zoom motor controls the focal length thereof and, thus, the imaging angle of view.

In a typical arrangement of such a combination of a video camera and an interchangeable lens device, the control signals supplied from the camera housing to the lens devices are generally simple stop/go signals. For example, the focus control signal may have a constant magnitude which is used to drive the focus motor, and a polarity which determines the direction in which that motor is driven. Likewise, the zoom control signal may have substantially constant magnitude to drive the zoom motor and a polarity which determines whether the motor is driven to zoom in or out.

Since the lens control signal is of a constant magnitude, such arrangements assume that the lens drive motors will be driven at a substantially constant speed, whereby uniform focus and zoom adjustments are effected. Uniform lens adjustment speeds for different interchangeable lenses and for different operating conditions are desired. The user may be accustomed to a particular focus adjustment speed or zoom adjustment speed; and, therefore, unexpected speed variations are not welcome. However, the assurance of uniform adjustment speeds generally requires the use of a reference and feedback control to make certain that the adjustment speed conforms to the reference.

In an attempt to miniaturize the motor control circuits incorporated into interchangeable lens devices, reference generators normally included in the lens device for motor speed control have been omitted. Even without a reference generator, it had been assumed that by using control signals of constant magnitude, uniform speeds may nevertheless be attained and feedback control is not needed. But, because of changes in ambient temperature, changes in the load presented to the lens drive motors and variations in the operating characteristics from one interchangeable lens device to another, the magnitude of the lens control signal may not be constant, but may vary. Furthermore, even if the magnitude of the lens control signal remains constant such that the signal is sufficient to control the focusing and zooming of one lens device at a proper rate of speed, the control signal may be inadequate for accurate control at desired speed of another lens device.

Consequently, focus and zoom adjustment speeds may vary from one lens device to another and, as the environmental conditions vary, the focus and zoom adjustment speeds for a given lens device may fluctuate. Hence, stable adjustment speeds of such lens devices may not be achieved.

European Patent Application EP-A-0 334 470 discloses a video camera comprising an image pick-up means, adjustable lens means through which an object can be imaged onto the image pick-up means, synchronizing signal producing means for providing a vertical video synchronizing signal, drive means for driving the lens means, and servo control means for providing a lens drive signal for controlling the drive means, the lens means, the drive means and the servo control means being provided in an interchangeable lens device removably mounted to a housing of the camera. The servo control unit in the interchangeable lens device comprises a first processor having stored therein information identifying the respective lens device and characteristics thereof. The vertical video synchronizing signal is supplied to a second processor within the camera body and is used to synchronize chip select and position control signals sent from the-' second processor to the first processor and sensed position signals sent from the first processor to the second processor.

US Patent US-A-4 296 446 discloses a motor speed control circuit for a magnetic video recording system in which a vertical video synchronizing signal is used to derive a reference speed signal for speed control.

According to the present invention there is provided a video camera comprising: an image pick-up means;adjustable lens means through which an object can be imaged onto the image pick-up means; synchronizing signal producing means for providing a vertical video synchronizing signal; drive means for driving the lens means; and servo control means for providing a lens drive signal for controlling the drive means; the lens means, the drive means and the servo control means being provided in an interchangeable lens device removably mounted to a housing of the camera; characterised in that: the housing and the interchangeable lens device are provided with connections enabling the vertical video synchronizing signal to be supplied from the synchronizing signal producing means to the lens device when the lens device is mounted to the housing; pulse generating means is provided for generating pulses at a rate determined by the speed of operation of the drive means; and the servo control means is responsive to said pulses and to the vertical video synchronizing signal supplied to the lens device from the synchronizing signal producing means to control said lens drive signal such that the drive means 16) operates at a generally uniform speed that is a function of the vertical video synchronizing signal.

In an embodiment of this invention, there is provided a video camera including a lens control apparatus in which an object is imaged through an adjustable lens onto an image pick-up device from which a video signal is derived. Servo control is used to drive the lens at a speed determined by the vertical synchronizing signal included in the video signal. The synchronizing signal which determines the speed at which the lens is driven is produced by a synchronizing signal generator included in the video camera, and is the vertical synchronizing signal normally included in the video signal.

In another embodiment of this invention, a focus motor and a zoom motor are used to adjust the focus and zoom settings of a lens, these motors producing pulses at a frequency determined by their respective operations. The motors are controlled such that the pulse frequencies have a substantially constant relationship with respect to the vertical synchronizing frequency.

Focus adjustments may be carried out automatically in response to a focus condition sensed from the video signal derived from the image pick-up element.

The invention will now be described by way of example with reference to the accompanying drawing, the sole figure of which is a block diagram of a video camera (including a lens control apparatus) embodying the invention.

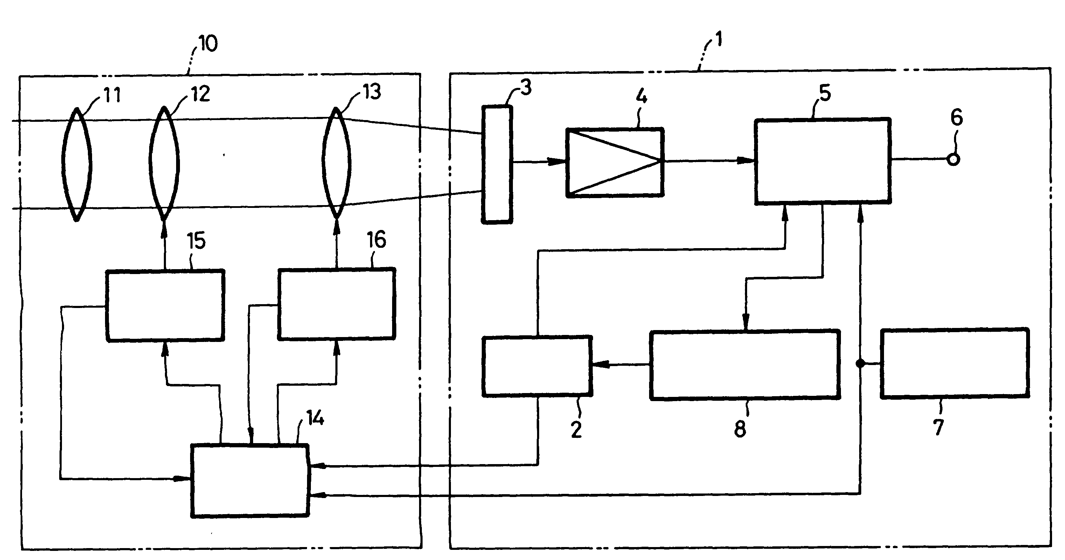

Referring to Figure 1, there is illustrated an embodiment of lens control apparatus for use in a video camera of the type having a camera housing 1 on which an interchangeable lens device 10 is mountable. For convenience, the housing 1 and the elements therein are referred to collectively as a video camera. As illustrated, the video camera includes an image pick-up device 3, a video signal processor 5, a focus detector 8 and a data processor (such as a central processing unit (CPU) 2.

The image pick-up device 3 preferably includes a solid state image pick-up element and may be a charge coupled device (CCD). The image pick-up device 3 produces a video signal in response to an image projected thereto through the lens device 10. The image pick-up device 3 is coupled to the video signal processor 5 by a video amplifier 4.

The video signal processor 5 is of the usual form and produces a video signal comprising video information derived from the image projected on the image pick-up device 3, together with standard horizontal and vertical synchronizing signals. The latter are supplied to the video signal processor 5 by a vertical synchronizing signal generator 7 of known form. As will be described below, the vertical synchronizing signal produced by the generator 7 is additionally supplied to the lens device 10.

The video signal produced by the video signal processor 5 is coupled to an output terminal 6 from which a television signal may be recorded by a video signal recorder or, alternatively, the television signal may be coupled to a suitable display.

It will be appreciated that an image sharply focused on the image pick-up device 3 is provided with a relatively sharp boundary between the focused object and its background. In the event of an unfocused condition, the sharpness of the boundary is reduced. This boundary is represented by a high frequency component in the image pick-up signal. The magnitude of the high frequency component is thus reduced when the lens device 10 is not in a proper, focused condition.

The focus detector 8 is coupled to the video signal processor 5 and detects the magnitude of the high frequency component included in the video signal derived from the image pick-up device 3. The focus detector 8 thus produces a signal representing the focus condition of the lens device 10. This focus condition signal is digitized and supplied to the CPU 2. The CPU 2 may be a microprocessor of known type (such as those manufactured by Intel, Motorola, Hitachi, and other microprocessor suppliers) and is also coupled to the video signal processor 5 to control the operation thereof. The operative inter-relationship between the CPU 2 and the video signal processor 5 forms no part of the present invention per se.

Although not shown herein, it will be appreciated that signals produced by manually operable switches may be supplied to the CPU 2 for the purpose of effecting various controls, including a zoom control as will be described. At this point, suffice it to say that a zoom control signal may be selected by an operator whose operation of manual switches or other suitable controls commands a zoom-in or zoom-out operation.

The focus and zoom operations are carried out by the elements included in the lens device 10. The lens device 10 preferably comprises a plurality of lens elements schematically illustrated as lens elements 11, 12 and 13. For convenience, the lens element 11 may be thought of as being fixed and the lens element 12 is adjustable relative to the lens element 11 so as to vary the focus condition of the lens device 10. A focusing motor 15 is mechanically coupled to the lens element 12 to adjust the position of the lens element 12 and, thus, to adjust the focus condition of lens device 10, in response to a lens drive signal produced by a processor 14. The processor 14 may be a CPU, similar to the CPU 2.

The CPU 14 is located physically within the housing of the lens device 10 and receives a signal produced by the focusing motor 15 indicative of the operation thereof. Advantageously, pulses are produced by a suitable frequency generator (not shown) included in or mechanically coupled to the focusing motor 15 at a repetition rate directly related to the operating (or drive) speed of the focusing motor 15. Hence, as the motor speed increases, the pulse frequency increases and, conversely, as the motor speed decreases, the pulse frequency likewise decreases. Thus, the CPU 14 is provided with an indication of the operating speed of the focusing motor 15.

The lens element 13 is identified for the purpose of the present description, as a zoom lens element. The lens element 13 is adjustable thus to vary the focal length of the lens device 10 from wide angle to telephoto. The lens element 13 is driven by a zoom motor 16 which may be similar to the focusing motor 15. A zoom lens drive signal is supplied to the zoom motor 16 by the CPU 14 to control the direction and speed thereof. Like the focusing motor 15, the zoom motor 16 supplies pulses to the CPU 14 having a repetition rate determined by the operating speed of the zoom motor 16. Hence, as the speed of the zoom motor 16 increases, the frequency of the pulses supplied thereby to the CPU 14 also increases. Conversely, as the operating speed of the zoom motor 16 decreases, the pulse frequency likewise decreases.

As shown, the CPU 14 is coupled to the CPU 2 and to the vertical synchronizing signal generator 7 included in the video camera by way of a suitable electrical connection between the video camera and the lens device 10. Known connectors, such as plug and socket, pins, etc. may be used for this connection. The CPU 14 thus receives the vertical synchronizing signal produced by the generator 7 as well as a lens control signal produced by the CPU 2, the latter including a focus command produced by the CPU 2 in response to the focus indicating signal supplied by the focus detector 8. The lens control signal coupled to the CPU 14 also may include a zoom control signal produced in response to operator actuation of a suitable zoom selector switch (not shown).

In operation, an object is imaged on the image pick-up device 3 by the lens elements 11, 12 and 13 of the lens device 10. The image pick-up device 3 supplies an image signal to the video signal processor 5 whereat the image signal is processed and combined with synchronizing signals, including the vertical synchronizing signal produced by the generator 7, to supply a video signal to the output terminal 6. This video signal also is supplied to the focus detector 8 which, as mentioned above, detects the focus condition of the object being imaged through the lens device 10.

The focus detector 8 provides a focus indicating signal to the CPU 2 which, in turn, supplies a focus command to the CPU 14 included in the lens device 10. The CPU 2 thus supplies the CPU 14 with data which are used by the CPU 14 to determine the direction in which the focusable lens element 12 must be adjusted to focus the lens device 10 properly on the object being imaged. As earlier described, lens control data supplied by the CPU 2 need not indicate the magnitude with which the lens element 12 should be driven.

The CPU 14 also receives vertical synchronizing signals from the generator 7 and exercises servo control over the focusing motor 15 in response to this vertical synchronizing signal and the lens control data supplied thereto. More particularly, the focusing motor 15 is driven by the CPU 14 in a direction determined by the lens control signal supplied by the CPU 2 so as to drive the lens element 12 in a direction to establish a proper, focused condition for the lens device 10.

As the focusing motor 15 operates, pulses having a frequency determined by the operating speed of the focusing motor 15 are supplied to the CPU 14. This pulse frequency is compared with the vertical synchronizing frequency of the generator 7. In one embodiment, when the focusing motor 15 operates at a proper, desired speed, a predetermined relationship is established between the repetition rate of the pulses produced by the focusing motor 15 and the vertical synchronizing frequency. The CPU 14 adjusts the operating speed of the focusing motor 15 so as to maintain this relationship constant. Hence, regardless of the direction in which the lens element 12 is moved for focus adjustments, the focusing motor 15 drives the lens element 12 at a substantially constant speed.

The zoom motor 16 is controlled by the CPU 14 in substantially the same way as is the focusing motor 15. The CPU 2 supplies zoom lens control data to the CPU 14 in response to the actuation of a suitable zoom switch (not shown) by an operator. Depending upon the selected direction in which the lens element 13 is to be driven, that is, depending upon whether a wide angle or telephoto image is desired, the CPU 2 supplies the CPU 14 with zoom control data determinative of this direction. The CPU 14 then supplies the zoom motor t6 with a suitable motor drive signal so as to drive the zoom motor 16 at a substantially constant, desired speed. The actual operating speed of the zoom motor 16 is represented by the repetition rate of the pulses supplied therefrom to the CPU 14. When the zoom motor operates at its proper speed, a predetermined relationship is established between the repetition rate of these pulses and the vertical synchronizing frequency. The CPU 14 exercises servo control over the zoom motor 16 such that the zoom motor 16 operates at a speed whereby this relationship is maintained constant.

When performing a focus control operation, the CPU 2 commands the CPU 14 to continue the focus adjustment until the CPU 2 is supplied with a focus indicating signal from the focus detector 8 indicating that the lens device 10 is properly focused. At that time, the CPU 2 commands the CPU 14 to terminate the focus adjustment operation, whereupon the focusing motor 15 is de-energized and the established focused condition is maintained.

Likewise, when an operator releases the zoom selector switch, the CPU 2 commands the CPU 14 to terminate the zoom operation. Consequently, the CPU 14 de-energizes the zoom motor 16 and the lens element 13 is maintained at the selected zoom position.

From the foregoing description, it will be appreciated that the focusing motor 15 and the zoom motor 16 are controlled by the CPU 14 to operate at respective, constant speeds. Speed control is effected by comparing the operating speeds of the motors 15 and 16 with the vertical synchronizing frequency included in the video signal produced by the video signal processor 5. Hence, if the lens device 10 is replaced by another interchangeable lens structure having motor-driven focus and zoom adjustments, the operation of the focusing and zoom motors included in the replacement lens structure likewise is controlled by the vertical synchronizing frequency of the video signal. The CPU included in the replacement lens structure cooperates with the focusing and zoom motors to form focusing and zoom servo control circuits, whereby focus and zoom adjustments are made at constant speeds.

Even though the lens device 10 does not include a reference voltage generator (and, thus facilitates miniaturization of the lens device 10), focus and zoom adjustments are effected at constant, uniform, stable speeds, provided that the vertical synchronizing frequency remains substantially constant. This latter condition is readily achieved by known vertical synchronizing generators.

Likewise, changes in the load driven by the focusing motor 15 and the zoom motor 16 will not result in an unanticipated or unstable change in the operating speeds of the motors 15 and 16 because of the servo control operation effected thereover by the CPU 14.

## Claims

1. A video camera comprising:
an image pick-up means (3);
adjustable lens means (12, 13) through which an object can be imaged onto the image pick-up means (3);
synchronizing signal producing means (7) for providing a vertical video synchronizing signal;
drive means (15, 16) for driving the lens means (12, 13); and
servo control means (14) for providing a lens drive signal for controlling the drive means (15, 16);
the lens means (12, 13), the drive means (15, 16) and the servo control means (14) being provided in an interchangeable lens device (10) removably mounted to a housing (1) of the camera;
characterised in that:
the housing (1) and the interchangeable lens device (10) are provided with connections enabling the vertical video synchronizing signal to be supplied from the synchronizing signal producing means (7) to said interchangeable lens device when the lens device is mounted to the housing;
pulse generating means (15, 16) is provided for generating pulses at a rate determined by the speed of operation of the drive means (15, 16); and
the servo control means (14) is responsive to said pulses and to the vertical video synchronizing signal supplied to the lens device (10) from the synchronizing signal producing means (7) to control said lens drive signal such that the drive means (15, 16) operates at a generally uniform speed that is a function of the vertical video synchronizing signal.

2. Video camera according to claim 1, wherein said interchangeable lens device (10) includes a zoom lens element (13) driven by said drive means (16).

3. Video camera according to claim 1 or claim 2, wherein said interchangeable lens device (10) includes a focusable lens element (12) driven by said drive means (15).

4. Video camera according to claim 3, wherein the camera housing (1) contains focus detector means (8) coupled to said image pick-up means (3) for detecting a focus condition of said lens device (10) by detecting the magnitude of a high frequency component in a signal produced by the image pick-up means (3) and for supplying to the servo control means (14) a focus indicating signal representing said focus condition, and wherein the servo control means (14) is responsive to said focus indicating signal and generates said lens drive signal.

5. Video camera according to any one of the preceding claims, wherein the image pick-up means (3) comprises a charge coupled device.

## Patentansprüche

1. Videokamera mit
einer Bildaufnahmeeinrichtung (3),
einstellbaren Linsenelementen (12, 13) zur Abbildung eines Objekts auf der Bildaufnahmeeinrichtung (3),
einer Synchronisiersignal-Generatoreinrichtung (7) zur Lieferung eines vertikalen Video-Synchronisiersignals,
einer Antriebsvorrichtung (15, 16) für den Antrieb der Linsenelemente (12, 13) und
einer Servosteuerungseinrichtung (14) zur Lieferung eines Objektivantriebssignals für die Steuerung der Antriebsvorrichtung (15, 16),
wobei die Linsenelemente (12, 13), die Antriebsvorrichtung (15, 16) und die Servosteuerungseinrichtung (14) in einer auswechselbaren Objektiveinheit (10) angeordnet sind, die abnehmbar an einem Gehäuse (1) der Kamera montiert ist,
**dadurch gekennzeichnet,**
daß das Gehäuse (1) und die auswechselbare Objektiveinheit (10) mit Verbindungen ausgestattet sind, die die Übertragung des vertikalen Video-Synchronisiersignals von der Synchronisiersignal-Generatoreinrichtung (7) zu der auswechselbaren Objektiveinheit ermöglichen, wenn die Objektiveinheit an dem Gehäuse montiert ist,
daß eine Impulsgeneratoreinrichtung (15, 16) vorgesehen ist zur Erzeugung von Impulsen mit einer Frequenz, die durch die Arbeitsgeschwindigkeit des Antriebsvorrichtung (15, 16) bestimmt ist,
und daß die Servosteuerungseinrichtung (14) auf die genannten Impulse und auf das von der Synchronisiersignal-Generatoreinrichtung (7) an die Objektiveinheit (10) gelieferte vertikalen Synchronisiersignal anspricht, um das Objektivantriebssignal so zu steuern, daß die Antriebsvorrichtung (15, 16) mit einer im wesentlichen gleichförmigen Geschwindigkeit arbeitet, die eine Funktion des vertikalen Video-Synchronisiersignals ist.

2. Videokamera nach Anspruch 1, bei der die auswechselbare Objektiveinheit (10) ein Zoom-Linsenelement (13) aufweist, daß von der Antriebsvorrichtung (16) angetrieben wird.

3. Videokamera nach Anspruch 1 oder 2, bei der die auswechselbare Objektiveinheit (10) ein fokussierbares Linsenelement (13) aufweist, daß von der Antriebsvorrichtung (15) angetrieben wird.

4. Videokamera nach Anspruch 3, bei der das Kameragehäuse (1) eine mit der Bildaufnahmeeinrichtung (3) verbundene Fokussierungs-Detektoreinrichtung (8) aufweist zur Detektierung des Fokussierungszustands der Objektiveinheit (10) durch Detektierung einer hochfrequenten Komponente in einem von Bildaufnahmeeinrichtung (3) erzeugten Signal und zur Lieferung eines den Fokussierungszustand repräsentierenden Fokussierungskennzeichnungssignals an die Servosteuerungseinrichtung (14), und bei der die Servosteuerungseinrichtung (14) auf das Fokussierungskennzeichnungssignal mit der Erzeugung des Objektivantriebssignals reagiert.

5. Videokamera nach einem der vorhergehenden Ansprüche, bei der die Bildaufnahmeeinrichtung (3) eine ladungsgekoppelte Vorrichtung (CCD) aufweist.

## Revendications

1. Caméra vidéo comprenant :
un moyen analyseur d'image (3) ;
un moyen formant objectif réglable (12, 13) à l'aide duquel on peut former l'image d'un objet sur le moyen analyseur d'image (3) ;
un moyen de production de signal de synchronisation (7) pour délivrer un signal de synchronisation vidéo verticale ;
un moyen d'entraînement (15, 16) pour entraîner le moyen formant objectif (12, 13) ; et
un moyen d'asservissement (14) pour fournir un signal d'entraînement d'objectif pour commander le moyen d'entraînement (15, 16);
le moyen formant objectif (12, 13), le moyen d'entraînement (15, 16) et le moyen d'asservissement (14) étant disposés dans un dispositif d'objectif interchangeable (10) monté de façon amovible sur le boîtier (1) de la caméra ;
caractérisée :
en ce que le boîtier (1) et le dispositif d'objectif interchangeable (10) sont pourvus de connexions permettant de délivrer le signal de synchronisation vidéo verticale depuis le moyen de production de signal de synchronisation (7) audit dispositif d'objectif interchangeable lorsque le dispositif d'objectif est monté sur le boîtier ;
en ce qu'il est prévu un moyen générateur d'impulsions (15, 16) pour produire des impulsions à un rythme déterminé par la vitesse de mise en oeuvre du moyen d'entraînement (15, 16) ; et
en ce que le moyen d'asservissement (14) est sensible auxdites impulsions et au signal de synchronisation verticale délivrés au dispositif d'objectif (10) depuis le moyen de production de signal de synchronisation (7) pour commander ledit signal d'entraînement d'objectif de façon telle que le moyen d'entraînement (15, 16) fonctionne à une vitesse globalement uniforme qui est fonction du signal de synchronisation vidéo verticale.

2. Caméra vidéo selon la revendication 1, dans laquelle ledit dispositif d'objectif interchangeable (10) comprend une lentille de zoom (13) entraînée par ledit moyen d'entraînement (16).

3. Caméra vidéo selon la revendication 1 ou la revendication 2, dans laquelle ledit dispositif d'objectif interchangeable (10) comprend une lentille de mise au point (12) entraînée par ledit moyen d'entraînement (15).

4. Caméra vidéo selon la revendication 3, dans laquelle le boîtier de caméra (1) contient un moyen détecteur de mise au point (8) raccordé audit moyen analyseur d'image (3) pour détecter un état de mise au point dudit dispositif d'objectif (10) en détectant l'amplitude d'une composante à haute fréquence d'un signal produit par le moyen analyseur d'image (3) et pour délivrer au moyen d'asservissement (14) un signal d'indication de mise au point représentant ledit état de mise au point, et dans laquelle le moyen d'asservissement (14) est sensible audit signal d'indication de mise au point et produit ledit signal d'entraînement d'objectif.

5. Caméra vidéo selon l'une quelconque des revendications précédentes, dans laquelle le moyen analyseur d'image (3) comprend un dispositif à couplage de charges.
